(19) Europäisches Patentamt
European Patent Office
Office européen des brevets

(11) **EP 4 428 564 A1**

(12) **EUROPEAN PATENT APPLICATION**

(43) Date of publication:
**11.09.2024 Bulletin 2024/37**

(21) Application number: **23160593.2**

(22) Date of filing: **07.03.2023**

(51) International Patent Classification (IPC):
*G01S 7/00* (2006.01)     *G01S 7/02* (2006.01)
*G01S 13/86* (2006.01)     *G01S 13/87* (2006.01)
*G01S 13/931* (2020.01)     *H04W 4/021* (2018.01)
*H04W 4/38* (2018.01)     *H04W 4/44* (2018.01)
*G01S 13/34* (2006.01)

(52) Cooperative Patent Classification (CPC):
**G01S 7/003; G01S 7/0232; G01S 7/0235;**
**G01S 13/86; G01S 13/87; G01S 13/931;**
**H04W 4/023; H04W 4/027; H04W 4/44;**
G01S 13/34; G01S 2013/9316; G01S 2013/93271

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Magna Electronics Sweden AB**
**447 37 Vårgårda (SE)**

(72) Inventors:
• **Thalya, Prateek**
**447 37 Vårgårda (SE)**
• **Aderum, Tobias**
**447 37 Vårgårda (SE)**
• **Eriksson, Olof**
**447 37 Vårgårda (SE)**

(74) Representative: **Westpatent AB**
**Almekärrsvägen 11**
**443 39 Lerum (SE)**

(54) **AN ENHANCED RADAR SYSTEM**

(57) The present disclosure relates to an ego vehicle radar arrangement (110) comprising an ego radar transceiver arrangement (111), an ego communication unit (112) and an ego control unit (113). The ego radar transceiver arrangement (111) is adapted to transmit radar signals (114) and to receive signals (115), and the ego communication unit (112) is adapted to communicate (191, 194) with a remote server (193). The ego control unit (113) is adapted to determine whether a received signal (115) contains noise that exceeds a threshold, and if that is the case, the ego control unit (113) is adapted to control the ego communication unit (112) to send an inquiry to the remote server (193), inquiring whether received noise is associated with a target vehicle radar arrangement (120), and to receive a reply to the inquiry from the remote server (193).

FIG. 1

## Description

The present disclosure relates to automotive radar systems, and in particular to mitigate decreased sensitivity in the presence of interfering signals. For this purpose, there is vehicle a radar arrangement comprising an ego radar transceiver arrangement, a communication unit and a control unit. The radar transceiver arrangement is adapted to transmit radar signals and to receive signals.

A modern car often comprises a plurality of radar transceivers for use in applications such as advanced driver assistance systems (ADAS). A relatively strong radar signal is normally transmitted from a front radar on the vehicle in order to detect objects in front of the vehicle at long distance, while more short-range radars are used as side radars and rearward looking radars. As old cars are replaced by new cars on public roads, more and more automotive radar transceivers are being introduced into the traffic infrastructure, which means that the density of radar transceivers on public roads increases rapidly.

Automotive radars are generally based on the well-known FMCW signal format, which is a frequency swept signal that is sometimes also referred to as a chirp signal. This signal format allows for high performance radar transceivers to be produced at low cost and has therefore become very popular.

Most automotive radar transceivers operate in dedicated automotive radar frequency bands, where automotive radar transmissions are allowed without any coordination. This means that radar signals may interfere with each other since there is nothing preventing the radar transmissions from simultaneously occupying the same frequencies. For an FMCW signal, such interference causes bursts of disturbance in the received signal, which complicates target detection and reduces overall radar performance. The interference problem is expected to become worse over time as the density of radar transceivers in the traffic infrastructure increases.

With wide bandwidth solutions this interference can be detected at a much larger distance than the true radar detection of the interference source vehicle. Assuming that the waveforms of the two radars are completely uncorrelated an additional noise can be detected in an ego radar receiver, and the maximum interference detection is then based on the level of thermal noise in the receiver. The distance $R_{interferer}$ at which interference is detected may then be estimated as

$$R_{interferer} = \sqrt{\frac{P_{transmit} * G * \lambda^2}{(4\pi)^2 * P_{noise} * NF * threshold}}$$

where $P_{transmit}$ is interferer transmitted power, G is receiver antenna gain, $\lambda$ is a free-space wavelength, $P_{noise}$ is detected noise power, NF is receiver noise figure and threshold is a receiver detection threshold set to avoid false target detections.

Effective methods to mitigate the effects of automotive radar interference after it occurs have been proposed. For instance, EP3173812 A1 discloses a method for interference mitigation which relies on the generation of an approximation signal which is used to replace interfered radar signal samples. WO2022233592 A1 discloses radar transceivers that can inherit time synchronization from a cellular access network such that radar transceivers operating in a certain frequency band can be synchronized such that at least some of the mutual interference can be avoided. However, despite these rather effective methods for mitigating interference among automotive radars, further techniques are desired in order to realize the full potential of automotive radar in applications such as advanced driver assistance systems (ADAS) and autonomous drive (AD). In particular it is desired to mitigate decreased sensitivity in the presence of interfering signals in automotive radar systems.

It is an object of the present disclosure to provide improved methods and devices for mitigating decreased sensitivity in the presence of interfering signals in automotive radar systems. This object is obtained by an ego vehicle radar arrangement comprising an ego radar transceiver arrangement, an ego communication unit and an ego control unit. The ego radar transceiver arrangement is adapted to transmit radar signals and to receive signals, the ego communication unit is adapted to communicate with a remote server. The ego control unit is adapted to determine whether a received signal contains noise that exceeds a threshold, and if that is the case, the ego control unit is adapted to control the ego communication unit to send an inquiry to the remote server, inquiring whether received noise is associated with a target vehicle radar arrangement, and to receive a reply to the inquiry from the remote server.

In this manner, received noise can be used to present an inquiry whether received noise is associated with a target vehicle radar arrangement, and thus whether received noise is associated with a target vehicle that has not yet been detected by the ego vehicle radar arrangement.

According to some aspects, the ego control unit is adapted to determine that a target vehicle, associated with the target vehicle radar arrangement, is approaching the ego vehicle radar arrangement by means of said reply.

This means that it can be determined that a target vehicle is approaching before the target vehicle can be detected by means of a radar detection.

According to some aspects, the reply comprises information of the distance, speed and direction of a target vehicle, associated with the target vehicle radar arrangement, relative the ego vehicle radar arrangement. According to some further aspects, the reply comprises information regarding objects on/by the road which objects have been detected by the target vehicle radar arrangement.

By using information from the target vehicle, a full perception of the traffic scene will still be maintained in at least a normally expected ego radar FOV, and possibly also outside the normally expected ego radar FOV.

According to some aspects, the reply comprises information regarding radar operating parameters for the target vehicle radar arrangement. According to some further aspects, the ego control unit is adapted to control the ego radar transceiver arrangement in dependence of the received radar operating parameters for the target vehicle radar arrangement, including controlling at least one of carrier frequency, operating bandwidth and time synchronisation.

In this manner, interference can be heavily reduced or even removed. This will create a peer-to-peer instantaneous coordination of only radars that actually do interfere, i.e. that create increased noise in the receivers of the involved vehicles According to some aspects, the ego control unit is adapted to determine whether a received signal contains noise that exceeds a threshold by determining a certain noise increase level during a certain time. In this manner the noise is determined as an increase of noise level.

According to some aspects, the radar transceiver arrangement is a frequency modulated continuous wave, FMCW, radar transceiver arrangement.

This object is also obtained by systems and methods that are associated with the above advantages.

BRIEF DESCRIPTION OF THE DRAWINGS

The present disclosure will now be described more in detail with reference to the appended drawings, where

Figure 1    schematically illustrates an overview of a radar system according to an example of the present disclosure;

Figure 2    schematically illustrates a control unit;

Figure 3    schematically illustrates a computer program product; and

Figure 4    schematically illustrates methods according to the present disclosure.

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

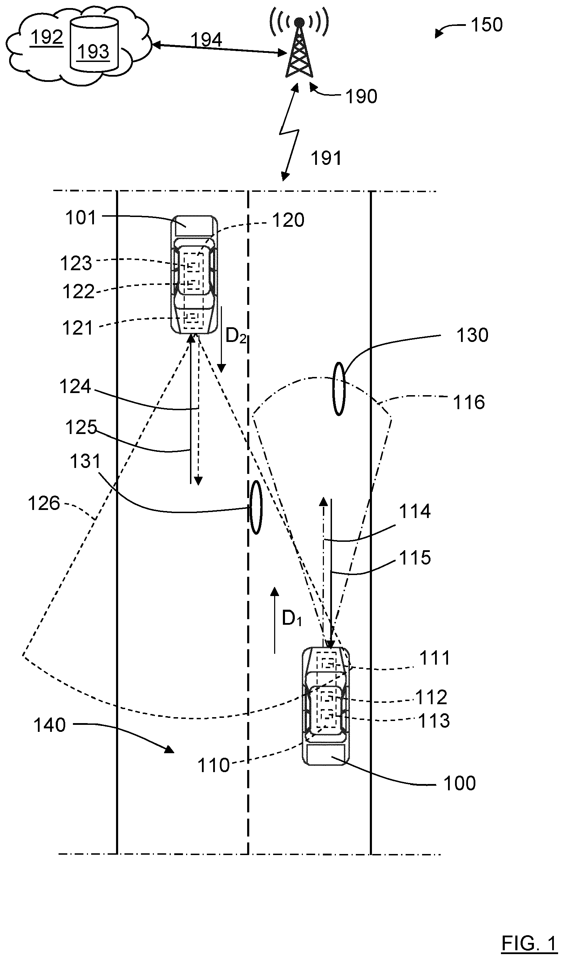

Figure 1 schematically shows top view of an ego vehicle 100 running on a road 140 in a first direction $D_1$, where the ego vehicle 100 comprises an ego vehicle radar arrangement 110 comprising an ego radar transceiver arrangement 111, an ego communication unit 112 and an ego control unit 113. The ego radar transceiver arrangement 111 is adapted to transmit radar signals 114 and to receive signals 115.

According to some aspects, the ego vehicle radar arrangement 110 is adapted to distinguish and/or resolve single targets 130 from the surroundings by means of said signals 114, 115 in an ego radar field-of-view (FOV) 116, for example by using a Doppler effect in a previously well-known manner. The radar signals may for example be in the form of FMCW (Frequency Modulated Continuous Wave) signals, for example operating around 77 GHz. However, some target objects 101, 131 are not detectable, being outside the ego FOV 116.

In the example of Figure 1, according to some aspects, there are two objects that are outside the ego FOV 116, a target vehicle 101 and a smaller vehicle 131 such as a motorcycle. Another such smaller vehicle 131 is at the edge of the ego FOV 116, and will be outside the ego FOV 116 if the effective ego FOV 116 is decreased due to interference.

Furthermore, the ego communication unit 112 is adapted to communicate 191, 194 with a remote server 193. According to some aspects, the ego radar transceiver arrangement 111 is adapted to be in contact with a remote server 193 suitably by means of wireless communication 191, for example via a communication system 190. This may, e.g., be a third-generation partnership program (3GPP) defined access network like the fourth generation (4G) or the fifth generation (5G) access networks. The access network may provide access to remote networks and other resources such as, e.g., the Internet. The remote server 193 may for example be comprised in a remote network 192 such as a cloud service, where the access network 190 is connected 194 to the remote network 192. According to some aspects, the remote server 193 is a stationary server, and may be moved from one physical server to another physical server.

According to the present disclosure, the ego control unit 113 is adapted to determine whether a received signal 115 contains noise that exceeds a threshold, and if that is the case, the ego control unit 113 is adapted to control the ego communication unit 112 to send an inquiry to the remote server 193, inquiring whether received noise is associated with a target vehicle radar arrangement 120, and to receive a reply to the inquiry from the remote server 193.

In this manner received noise can be used to present an inquiry whether received noise is associated with a target vehicle radar arrangement 120, and thus whether received noise is associated with a target vehicle that has not yet been detected by the ego vehicle radar arrangement 110. Assuming the ego vehicle radar arrangement 110 is designed for a radar target detection range of 250m, this corresponds to a power density of around -80 dBm. The power density level for the interferer is about 10 dB higher, and at -80 dBm the interferer is at a distance exceeding 800m.

According to some aspects, the ego control unit 113 is adapted to determine that a target vehicle 101, associated with the target vehicle radar arrangement 120, is approaching the ego vehicle radar arrangement 110 by means of said reply. In the example of Figure 1, the target vehicle 101 is approaching the ego vehicle radar arrangement 110 in a second direction $D_2$, different from the first direction $D_1$.

This means that it can be determined that a target vehicle is approaching before the target vehicle can be detected by means of a radar detection.

According to some aspects, the reply comprises information of the distance, speed and direction $D_2$ of a target vehicle 101, associated with the target vehicle radar arrangement 120, relative the ego vehicle radar arrangement 110.

According to some aspects, the reply comprises information regarding objects 131 on/by the road 154 which objects 131 have been detected by the target vehicle radar arrangement 120.

If the target vehicle is approaching, the interference will increase and thereby reduce the detection probability of other road objects 130, 131 in the ego vehicle path, i.e. the ego radar FOV 116 will be reduced. By using information from the target vehicle 101, a full perception of the traffic scene will still be maintained in at least a normally expected ego radar FOV 116, and possibly also outside the normally expected ego radar FOV 116. According to some aspects, the reply comprises information regarding radar operating parameters for the target vehicle radar arrangement 120.

According to some aspects, the ego control unit 113 is adapted to control the ego radar transceiver arrangement 111 in dependence of the received radar operating parameters for the target vehicle radar arrangement 120, including controlling at least one of carrier frequency, operating bandwidth and time synchronisation.

In this manner, interference can be heavily reduced or even removed. This will create a peer-to-peer instantaneous coordination of only radars that actually do interfere, i.e. that create increased noise in the receivers of the involved vehicles.

According to some aspects, the ego control unit 113 is adapted to determine whether a received signal 115 contains noise that exceeds a threshold by determining a certain noise increase level during a certain time. In this manner the noise is determined as an increase of noise level.

The present disclosure also relates to a radar system 150 for coordinated automotive radar transmission, comprising a plurality of vehicle radar arrangements 110, 120 as described herein. The radar system also comprises at least one remote server 193 adapted to communicate with corresponding communication units 112, 122. The remote server 193 is adapted to determine whether at least one noise source reported from an ego vehicle radar arrangement 110 relates to transmitted radar signals 124 from at least one target vehicle radar arrangement 120, and if that is the case, report that to the ego vehicle radar arrangement 110 such that the ego vehicle radar arrangement 110 is informed of the presence of said target vehicle radar arrangement 120.

In this manner received noise can be used to generate an association with a target vehicle radar arrangement 120, and thus a target vehicle that has not yet been detected by the ego vehicle radar arrangement 110 can be reported to the ego vehicle radar arrangement 110.

According to some aspects, if a noise source reported from the ego vehicle radar arrangement 110 is determined to relate to transmitted radar signals 124 from at least one target vehicle radar arrangement 120, the remote server 193 is adapted to report that to said target vehicle radar arrangement 120, such that said target vehicle radar arrangement 120 is informed of the presence of the first vehicle radar arrangement 110.

This means that the target vehicle radar arrangement 120 is informed as well. For this purpose, the target vehicle radar arrangement 120 comprises a target radar transceiver arrangement 121, an target communication unit 122 and a target control unit 123.

At this stage it is not possible to determine the distance between the ego vehicle 100 and the target vehicle 101, but it is possible to determine the interfering signal angle-of-arrival based on the beamforming capability of a receiver part of the radar transceiver arrangement 111. Together with for example map data, this can be used to determine a rough estimate of the target position.

According to some aspects, if a noise source reported from the ego vehicle radar arrangement 110 is determined to relate to transmitted radar signals 124 from said target vehicle radar arrangement 120, the remote server 193 is adapted to coordinate radar signal transmissions 114, 124 for these vehicle radar arrangements 110, 120 such that only one of these vehicle radar arrangements 110, 120 at a time transmits radar signals 114, 124.

In this manner, interference can be heavily reduced or even removed.

According to some aspects, the radar system 150 further comprises at least one cellular access network node 190 that is adapted to communicate 191, 194 with the vehicle radar arrangements 110, 120 and the remote server 193. According to some further aspects, each network node 190 is comprised in a third-generation partnership program, 3GPP, defined cellular access network.

In this manner, a standard wireless communication system can be used for communication between the vehicle radar arrangements 110, 120 and the remote server 193.

Furthermore, V2V (vehicle-to-vehicle) and V2X (vehicle-to-anything) communication can according to some aspects also be used for relaying information to and from the vehicle radar arrangements 110, 120

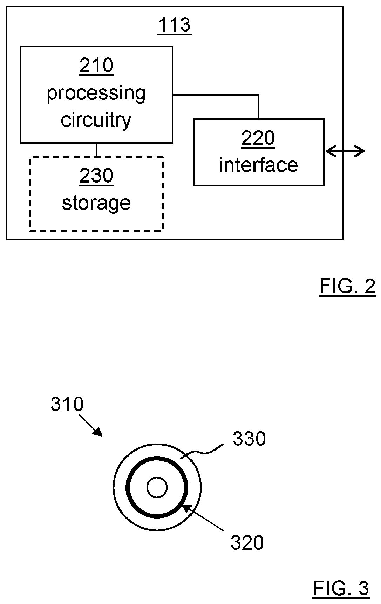

Figure 2 schematically illustrates, in terms of a number of functional units, the components of the ego control unit 113 according to an embodiment. The ego control unit 113 may be constituted by one or more control unit parts that can be separate from each other. Although the ego control unit 113 is indicated to be positioned in the ego vehicle 100, some control unit parts may for example be comprised in a remote server 193 or elsewhere. The same is the case for the target control unit 123.

Processing circuitry 210 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 230. The processing circuitry 210 may further be provided as at least one application specific integrated circuit (ASIC), or field programmable gate array (FPGA) .

Particularly, the processing circuitry 210 is configured to cause the ego control unit 113 to perform a set of operations, or steps. These operations, or steps, were discussed above in connection to the various radar transceivers and methods. For example, the storage medium 230 may store the set of operations, and the processing circuitry 210 may be configured to retrieve the set of operations from the storage medium 230 to cause the ego control unit 113 to perform the set of operations. The set of operations may be provided as a set of executable instructions. Thus, the processing circuitry 210 is thereby arranged to execute methods and operations as herein disclosed.

The storage medium 230 may also comprise persistent storage, which, for example, can be any single one or combination of magnetic memory, optical memory, solid state memory or even remotely mounted memory.

The ego control unit 113 may further comprise a communications interface 220 for communications with at least one other unit such as for example the ego radar transceiver arrangement 111. As such, the communications interface 220 may comprise one or more transmitters and receivers, comprising analogue and digital components and a suitable number of ports for wired or wireless communication.

The processing circuitry 210 is adapted to control the general operation of the ego control unit 113 e.g. by sending data and control signals to the external unit and the storage medium 230, by receiving data and reports from the external unit, and by retrieving data and instructions from the storage medium 230. Other components, as well as the related functionality, of the ego control unit 113 are omitted in order not to obscure the concepts presented herein.

Figure 3 shows a computer program product 310 comprising computer executable instructions 320 arranged on a computer readable medium 330 to execute any of the methods disclosed herein.

According to some aspects, detected interference is used for detecting the possibility of a target vehicle that might be not in the range of the ego vehicle radar arrangement 110. By communicating with a remote server, such as an Internet server, via a base station or other suitable means, the source of the detected interference can be verified, for example if it is a vehicle and what sort of vehicle it is etc.

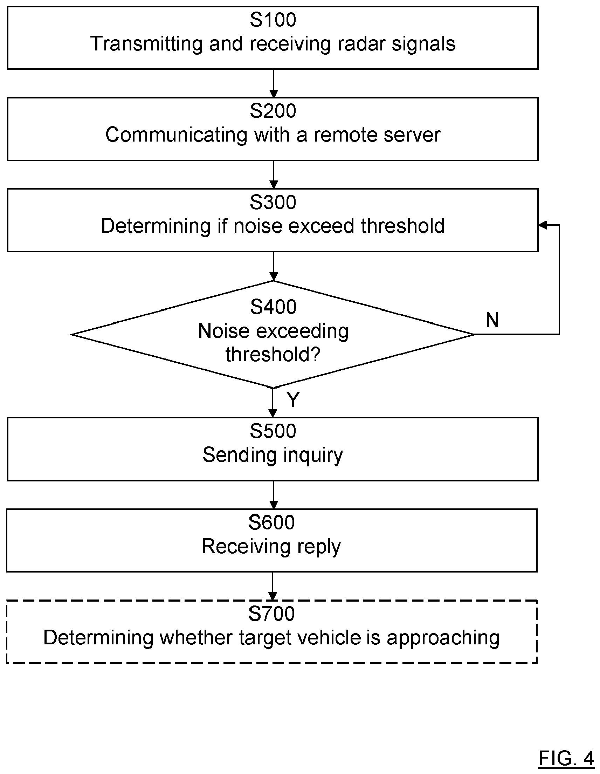

With reference to Figure 4, the present disclosure also relates to a method in an ego vehicle radar arrangement 110. The method comprises transmitting and receiving S100 radar signals 114, 115, communicating S200 with a remote server 193, and determining S300 whether a received signal 115 contains noise that exceeds a threshold. If S400 that is the case, the method comprises sending S500 an inquiry to the remote server 193, inquiring whether received noise is associated with a target vehicle radar arrangement 120, and receiving S600 a reply to the inquiry from the remote server 193.

According to some aspects, the method further comprises determining S700 whether a target vehicle 101, associated with the target vehicle radar arrangement 120, is approaching the ego vehicle radar arrangement 110 using said reply.

The present disclosure is not limited the examples disclosed above, but may vary freely within the scope of the appended claims, For example, the radar transceiver arrangement 111 can be an FMCW radar transceiver arrangement, but other vehicle radar modulations are also conceivable such as for example OFDM (Orthogonal Frequency-Division Multiplexing).

The present disclosure presents a solution to mitigating decreased sensitivity in the presence of interfering signals in automotive radar systems, where the solution does not require any changes in radar transceiver hardware or processing software. Additional interferer thresholds on the baseband signal can according to some aspects be used to detect interference.

**Claims**

1. An ego vehicle radar arrangement (110) comprising an ego radar transceiver arrangement (111), an ego communication unit (112) and an ego control unit (113), where the ego radar transceiver arrangement (111) is adapted to transmit radar signals (114) and to receive signals (115), where the ego communication unit (112) is adapted to communicate (191, 194) with a remote server (193), and where the ego control unit (113) is adapted to determine whether a received signal (115) contains noise that exceeds a threshold, and if that is the case, the ego control unit (113) is adapted to control the ego communication unit (112) to send an inquiry to the remote server (193), inquiring whether received noise is associated with a target vehicle radar arrangement (120), and to receive a reply to the inquiry from the remote server (193).

2. The ego vehicle radar arrangement (110) according to claim 1, wherein the ego control unit (113) is adapted to determine that a target vehicle (101), associated with the target vehicle radar arrangement (120), is approaching the ego vehicle radar arrangement (110) by means of said reply.

3. The ego vehicle radar arrangement (110) according to any one of the claims 1 or 2, wherein the reply comprises information of the distance, speed and direction of a target vehicle (101), associated with the target vehicle radar arrangement (120), relative the ego vehicle radar arrangement (110).

4. The ego vehicle radar arrangement (110) according to any one of the previous claims, wherein the reply comprises information regarding objects on/by the road which objects have been detected by the target vehicle radar arrangement (120).

5. The ego vehicle radar arrangement (110) according to any one of the previous claims, wherein the reply comprises information regarding radar operating parameters for the target vehicle radar arrangement (120).

6. The ego vehicle radar arrangement (110) according to claim 5, wherein the ego control unit (113) is adapted to control the ego radar transceiver arrangement (111) in dependence of the received radar operating parameters for the target vehicle radar arrangement (120), including controlling at least one of carrier frequency, operating bandwidth and time synchronisation.

7. The ego vehicle radar arrangement (110) according to any one of the previous claims, wherein the ego control unit (113) is adapted to determine whether a received signal (115) contains noise that exceeds a threshold by determining a certain noise increase level during a certain time.

8. The vehicle radar arrangement according to any one of the previous claims, wherein the radar transceiver arrangement (111) is a frequency modulated continuous wave, FMCW, radar transceiver arrangement.

9. A radar system (150) for coordinated automotive radar transmission, comprising a plurality of vehicle radar arrangements (110, 120) according to any one of the claims 1-8 and at least one remote server (193) adapted to communicate with corresponding communication units (112, 122), where the remote server (193) is adapted to determine whether at least one noise source reported from an ego vehicle radar arrangement (110) relates to transmitted radar signals (124) from at least one target vehicle radar arrangement (120), and if that is the case, report that to the ego vehicle radar arrangement (110) such that the ego vehicle radar arrangement (110) is informed of the presence of said target vehicle radar arrangement (120).

10. The radar system (150) according to claim 9, wherein, if a noise source reported from the ego vehicle radar arrangement (110) is determined to relate to transmitted radar signals (124) from at least one target vehicle radar arrangement (120), the remote server (193) is adapted to report that to said target vehicle radar arrangement (120), such that said target vehicle radar arrangement (120) is informed of the presence of the first vehicle radar arrangement (110).

11. The radar system (150) according to any one of the claims 9 or 10, wherein, if a noise source reported from the ego vehicle radar arrangement (110) is determined to relate to transmitted radar signals (124) from said target vehicle radar arrangement (120), the remote server (193) is adapted to coordinate radar signal transmissions (114, 124) for these vehicle radar arrangements (110, 120) such that only one of these vehicle radar arrangements (110, 120) at a time transmits radar signals (114, 124) .

12. The radar system (150) according to any one of the claims 9-11, further comprising at least one cellular access network node (190) that is adapted to communicate (191, 194) with the vehicle radar arrangements (110, 120) and the remote server (193).

13. The radar system (150) according to claim 12, wherein each network node (190) is comprised in a third-generation partnership program, 3GPP, defined cellular access network.

14. A method in an ego vehicle radar arrangement (110), where the method comprises

transmitting and receiving (S100) radar signals (114, 115); communicating (S200) with a remote server (193);
determining (S300) whether a received signal (115) contains noise that exceeds a threshold; and if (S400) that is the case
sending (S500) an inquiry to the remote server (193), inquiring whether received noise is associated with a target vehicle radar arrangement (120); and
receiving (S600) a reply to the inquiry from the remote server (193) .

15. The method according to claim 14, further comprising determining (S700) whether a target vehicle (101), associated with the target vehicle radar arrangement (120), is approaching the ego vehicle radar arrangement (110) using said reply.

FIG. 2

FIG. 3

**S100**
Transmitting and receiving radar signals

**S200**
Communicating with a remote server

**S300**
Determining if noise exceed threshold

**S400**
Noise exceeding threshold?

N

Y

**S500**
Sending inquiry

**S600**
Receiving reply

**S700**
Determining whether target vehicle is approaching

FIG. 4

Europäisches
Patentamt

European
Patent Office

Office européen
des brevets

**EUROPEAN SEARCH REPORT**

Application Number

EP 23 16 0593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2017 216435 A1 (AUDI AG [DE]) 21 March 2019 (2019-03-21) | 1-11,14, 15 | INV. G01S7/00 |
| Y | * paragraph [0004] * * paragraph [0011] - paragraph [0012] * * paragraph [0026] - paragraph [0032] * * figures 1,2 * ----- | 12,13 | G01S7/02 G01S13/86 G01S13/87 G01S13/931 H04W4/021 |
| Y | US 2022/326344 A1 (TORRES FELIPE [DE] ET AL) 13 October 2022 (2022-10-13) | 12,13 | H04W4/38 H04W4/44 |
| A | * paragraph [0050] - paragraph [0054] * * paragraph [0059] * * paragraph [0065] * * paragraph [0074] - paragraph [0075] * * figures 1-5 * ----- | 1-11,14, 15 | ADD. G01S13/34 |
| A | DE 10 2021 202142 A1 (BOSCH GMBH ROBERT [DE]) 8 September 2022 (2022-09-08) * abstract * * figures 1-4 * ----- | 1-15 | |
| A | WO 2021/127447 A1 (LYFT INC [US]) 24 June 2021 (2021-06-24) * abstract * * figures 1-8 * ----- | 1-15 | TECHNICAL FIELDS SEARCHED (IPC) G01S H04W |

The present search report has been drawn up for all claims

| Place of search | Date of completion of the search | Examiner |
|---|---|---|
| Munich | 25 July 2023 | Köppe, Maro |

## ANNEX TO THE EUROPEAN SEARCH REPORT
## ON EUROPEAN PATENT APPLICATION NO.

EP 23 16 0593

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2023

| Patent document cited in search report | Publication date | Patent family member(s) | | Publication date |
|---|---|---|---|---|
| DE 102017216435 A1 | 21-03-2019 | NONE | | |
| US 2022326344 A1 | 13-10-2022 | CN | 115201764 A | 18-10-2022 |
| | | EP | 4071498 A1 | 12-10-2022 |
| | | US | 2022326344 A1 | 13-10-2022 |
| DE 102021202142 A1 | 08-09-2022 | CN | 115015851 A | 06-09-2022 |
| | | DE | 102021202142 A1 | 08-09-2022 |
| WO 2021127447 A1 | 24-06-2021 | US | 2021190901 A1 | 24-06-2021 |
| | | WO | 2021127447 A1 | 24-06-2021 |

EPO FORM P0459

For more details about this annex : see Official Journal of the European Patent Office, No. 12/82

**EP 4 428 564 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3173812 A1

- WO 2022233592 A1